Europäisches Patentamt

European Patent Office

Office européen des brevets

(11) Veröffentlichungsnummer : **0 073 497**
**B1**

(12)

## EUROPÄISCHE PATENTSCHRIFT

(45) Veröffentlichungstag der Patentschrift :
27.07.88

(51) Int. Cl.⁴ : **B 60 J   7/16**, B 62 D 33/06

(21) Anmeldenummer : 82107898.7

(22) Anmeldetag : 27.08.82

(54) Verschwenkbare Abdeckklappe zum Verschliessen einer Öffnung im Dach einer Fahrerhauskabine.

(30) Priorität : 31.08.81 US 298237

(43) Veröffentlichungstag der Anmeldung :
09.03.83 Patentblatt 83/10

(45) Bekanntmachung des Hinweises auf die Patenterteilung : 27.07.88 Patentblatt 88/30

(84) Benannte Vertragsstaaten :
AT BE CH DE FR GB IT LI NL SE

(56) Entgegenhaltungen :
DE-A- 2 616 237
GB-A-   835 068
GB-A- 1 577 316
US-A- 2 159 516
US-A- 2 337 632
US-A- 2 810 334
US-A- 3 632 160
US-A- 4 099 766
US-A- 4 119 340
US-A- 4 300 440
US-A- 4 329 917

(73) Patentinhaber : DEERE & COMPANY
1 John Deere Road
Moline Illinois 61265 (US)

(72) Erfinder : Meyer, Raymond Joseph
1707 Maplewood Dr.
Cedar Falls Iowa 50613 (US)

(74) Vertreter : Gramm, Werner, Prof. Dipl.-Ing. et al
Patentanwälte Gramm + Lins Theodor-Heuss-
Strasse 2
D-3300 Braunschweig (DE)

## Beschreibung

Die Erfindung betrifft eine verschwenkbare Abdeckklappe zum Verschließen einer Öffnung im Dach einer Fahrerhauskabine, bestehend aus einem Klappendeckel, der in seiner Schließstellung die genannte Dachöffnung vollständig abdeckt, die von einem Rahmen eingefaßt ist, der ein vorderes und hinteres Rahmenteil aufweist, die der Vorderseite bzw. der Rückseite der Fahrerhauskabine zugewandt sind, und aus zumindest einem Schwenkarm, dessen erstes Armende an einer ersten Konsole am hinteren Rahmenteil der Dachöffnung angelenkt ist, um den Klappendeckel gegenüber dem Dach öffnen und schließen zu können, und dessen zweites Armende an einer zweiten Konsole an der Unterseite des Klappendeckels angelenkt ist, um letzteren gegenüber dem Schwenkarm relativ verschwenken zu können, wobei Reibungselemente zwischen den genannten Teilen angeordnet sind um Reibungskontakt zu erzeugen, und Vorspannelemente zum Aufbringen einer vorbestimmten Kraft an Armenden des Schwenkarmes und zur Begrenzung der freien Verschwenkbarkeit an diesen Armenden dienen derart, daß der Klappendeckel seine jeweils gewünschte Stellung relativ gegenüber dem Dach beibehält und somit aus seiner Schließstellung in eine Vielzahl von Offenstellungen verschwenkt werden kann.

Eine derartige Ausführungsform läßt sich der US-A-2 810 334 entnehmen. Hier sind am hinteren Rahmenteil des die Dachöffnung einfassenden Rahmens zwei erste Konsolen befestigt, denen zwei zweite Konsolen zugeordnet sind, die — bei geschlossener Abdeckklappe — unmittelbar über den ersten Konsolen liegen und am hinteren Rahmenteil der Abdeckklappe befestigt sind. Die vier genannten Konsolen erstrecken sich innerhalb der Umfangskontur des die Dachöffnung einfassenden Rahmens bzw. des Rahmens der Abdeckklappe jeweils nach vorn. Es sind zwei Schwenkarme vorgesehen, die mit ihren ersten Armenden an den ersten Konsolen und mit ihren zweiten Armenden an den zweiten Konsolen angelenkt sind. Diese beiden Schwenkarme sind innerhalb der Umfangskontur der Öffnung im Dach angeordnet, wobei die beiden Anlenkpunkte ihrer ersten Armenden wie auch die beiden Anlenkpunkte ihrer zweiten Armenden jeweils gemeinsam je eine senkrecht zu den Schwenkarmen verlaufende Schwenkachse bilden. Der Klappendeckel weist auf seinem Umfang eine durchgehend umlaufende, sich über die Umfangskontur der Dachöffnung hinaus erstreckende Lippe auf und ist wahlweise um das vordere oder hintere Rahmenteil des Rahmens verschwenkbar.

Bei dieser vorbekannten Ausführungsform wird jeder Schwenkarm durch zwei gelenkig miteinander verbundene Teilarme gebildet, die bei geschlossener Abdeckklappe übereinander liegen. Zwischen den beiden genannten Gelenkpunkten ist eine Stange angeordnet. Ferner sind in den beiden Gelenkpunkten jeweils zwischen den beiden Teilarmen Reibungsscheiben angeordnet. An dem Ende der genannten Stange ist eine eine Handhabe aufweisende Spannmutter vorgesehen, durch die eine vorbestimmte Kraft auf die beiden Gelenkpunkte bzw. auf die Teilarme und die zwischen ihnen angeordneten Reibungsscheiben aufgebracht werden kann.

Die genau gleiche Anordnung der vorstehend beschriebenen Schwenkarme mit ihrer Lagerung ist zwischen dem vorderen Rahmenteil des die Dachöffnung einfassenden Rahmens sowie dem vorderen Rahmenteil der Abdeckklappe vorgesehen.

Diese vorbekannte Konstruktion ist bedingt durch die Vielzahl der Einzelteile aufwendig in der Herstellung und bedingt durch die Vielzahl der Gelenkstellen aufwendig in der Wartung. Der wesentliche Nachteil ist jedoch darin zu sehen, daß sich die vorbekannte Abdeckplatte nur zur Be- bzw. Entlüftung der Fahrerhauskabine eignet, sich aber nicht vollständig öffnen läßt, um in Notfällen ggf. als Notausstieg zu dienen. Ein derartiger Notausstieg ist in einigen Ländern zwingend vorgeschrieben.

Ausgehend von der eingangs erläuterten Ausführungsform liegt der Erfindung die Aufgabe zugrunde, eine verschwenkbare Abdeckklappe zu entwickeln, die sich im Alltag zur Be- bzw. Entlüftung der Fahrerhauskabine, in Notfällen aber auch als Notausstieg eignet.

Diese Aufgabe wird erfindungsgemäß in Verbindung mit den eingangs aufgezählten Merkmalen dadurch gelöst, daß nur am hinteren Rahmenteil zumindest ein starr ausgebildeter Schwenkarm angelenkt ist, der gabelförmige Armenden aufweist, und daß die Reibungselemente jeweils zwischen den Konsolen und den an ihnen angelenkten gabelförmigen Armenden angeordnet sind.

Grundsätzlich braucht nur ein einziger Schwenkarm vorgesehen zu werden, jedoch ist es vorteilhaft, wenn innerhalb der Umfangskontur der Öffnung im Dach zwei Schwenkarme vorgesehen sind, wobei die beiden Anlenkpunkte ihrer ersten Armenden wie auch die beiden Anlenkpunkte ihrer zweiten Armenden jeweils gemeinsam je eine senkrecht zu den Schwenkarmen verlaufende Schwenkachse bilden.

Ein wesentliches Merkmal der Erfindung ist darin zu sehen, daß die Abdeckklappe nur an einer Seite angelenkt ist und dadurch um ihren einen Rand eine Verschwenkung um 90° zuläßt, so daß die Dachöffnung vollständig freigelegt werden kann. Vorteilhaft ist ferner, daß nur maximal zwei starre Schwenkarme erforderlich sind, wodurch die Zahl der Einzelteile sowie der Gelenkstellen reduziert werden können.

Dabei ist es zweckmäßig, wenn die federnden Vorspannelemente justierbar sind, um zwischen den Reibungsscheiben, der zugeordneten Konsole sowie dem zugeordneten gabelförmigen Armende eine einstellbare Kraft hervorzurufen, die sowohl die Schwenkarme als auch den Klappendeckel in gewünschten Stellungen gegenüber dem Dach festhalten.

Um die synchrone Verschwenkung der beiden Schwenkarme sicherzustellen und ein Verbiegen des Klappendeckels zu vermeiden, ist es vorteilhaft, wenn eine Stange zwischen den zweiten Konsolen gelagert und fest mit den zweiten Armenden der Schwenkarme verbunden ist.

Zur Verriegelung des Klappendeckels in seiner Schließstellung kann am Rand des Klappendeckels auf seiner Unterseite eine Klinke vorgesehen sein, die eine am Dach befestigte Rast hintergreifen kann. Dadurch erhält man eine Einbruchsicherung.

Eine gute Abdichtung bei geschlossenem Klappendeckel ist dann gewährleistet, wenn der Klappendeckel auf seinem Umfang eine durchgehend umlaufende, sich über die Umfangskontur der Dachöffnung hinaus erstreckende Lippe aufweist und wahlweise um das vordere oder hintere Rahmenteil des Rahmens verschwenkbar ist. Zusätzlich kann dabei auf dem oberen Rand des Rahmens eine Dichtung angeordnet sein.

In seiner vollständig geöffneten Stellung steht der Klappendeckel etwa rechtwinklig zum Dach der Fahrerhauskabine, so daß ein geeigneter Notausstieg geschaffen ist. Außerdem aber kann der Klappendeckel sowohl um die ersten als auch die zweiten Enden der Schwenkarme verschwenkt werden, so daß von außen Luft in die Fahrerhauskabine hinein gelenkt bzw. Luft aus der Fahrerhauskabine nach außen abgeleitet werden kann, während gleichzeitig das Eindringen von Niederschlag verhindert wird.

Der Klappendeckel kann aber nicht nur in Fahrtrichtung gesehen nach vorn oder aber nach hinten geöffnet, sondern auch parallel zum Dach der Fahrerhauskabine nach oben angehoben werden.

Es erweist sich bei der neuen Ausführungsform als besonders vorteilhaft, daß die jeweils eingestellte Stellung des Klappendeckels auch dann beibehalten wird, wenn das Fahrzeug unebenes Gelände durchquert. Vorteilhaft ist ferner die einfache Konstruktion und ökonomische Herstellung der Abdeckklappe.

Weitere Merkmale der Erfindung sind Gegenstand der Unteransprüche und werden zusammen mit den erzielten Vorteilen anhand zweier Ausführungsbeispiele erläutert.

In der Zeichnung sind zwei als Beispiele dienende Ausführungsformen der Erfindung dargestellt. Es zeigen :

Figur 1 in Draufsicht das Dach einer Fahrerhauskabine mit einer eingebauten verschwenkbaren Abdeckklappe, bei der der Klappendeckel aus Gründen der besseren Übersichtlichkeit entfernt ist ;

Figur 2 in vergrößertem Maßstab eine Seitenansicht, zum Teil geschnitten, gemäß der Blickrichtung 2-2 in Figur 1 :

Figur 3 in vergrößertem Maßstab die untere Hälfte der in Figur 1 dargestellten verschwenkbaren Abdeckklappe ;

Figur 4 in weiter vergrößertem Maßstab und perspektivischer Darstellung eine Konsole ;

Figur 5 eine abgewandelte Ausführungsform in einer Darstellung gemäß Figur 1 und

Figuren 6 bis 8 verschiedene Stellungen des Klappendeckels der verschwenkbaren Abdeckklappe entsprechend den Blickrichtungen 6, 7, 8- 6, 7, 8 in Figur 1.

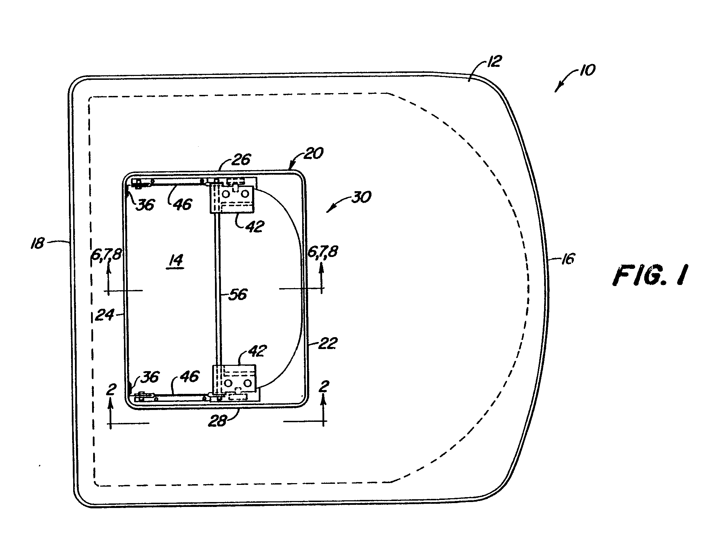

Gemäß den Figuren 1 bis 3 weist eine Fahrerhauskabine 10 ein Dach 12 mit einer Öffnung 14 auf, die so bemessen ist, daß ein Fahrer des Fahrzeuges im Notfall durch die Öffnung 14 hindurchklettern kann, z. B. wenn die Tür Fahrerhauses verklemmt ist. Das Dach 12 weist eine Vorderfront 16 und eine rückwärtige Seite 18 entsprechend dem vorderen und rückwärtigen Ende des Fahrzeugs auf. In die Öffnung 14 ist ein fest mit dem Dach 12 verbundener Rahmen 20 eingesetzt, der vorzugsweise rechteckige Form aufweist und aus einem vorderen Rahmenteil 22, einem hinteren Rahmenteil 24 und zwei seitlichen Rahmenteilen 26, 28 besteht. Dabei liegen das vordere und hintere Rahmenteil 22, 24 angenähert parallel zur Vorderseite 16 bzw. Rückseite 18 des Dachs 12.

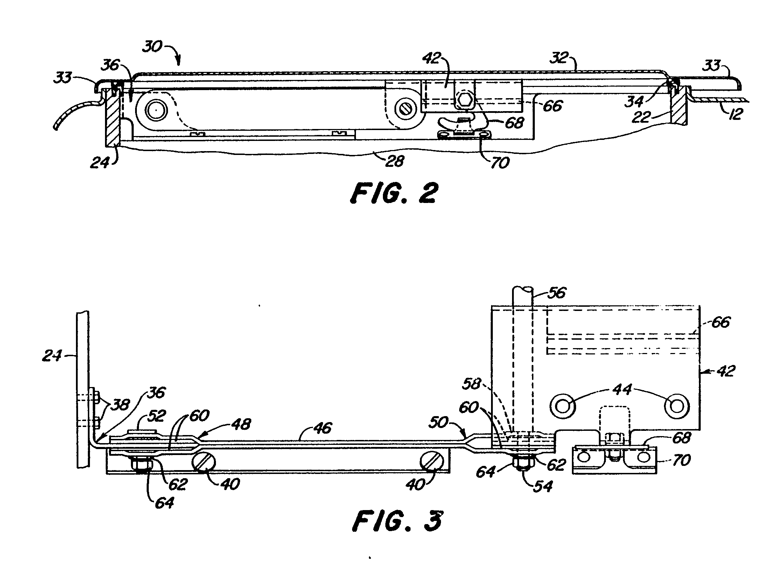

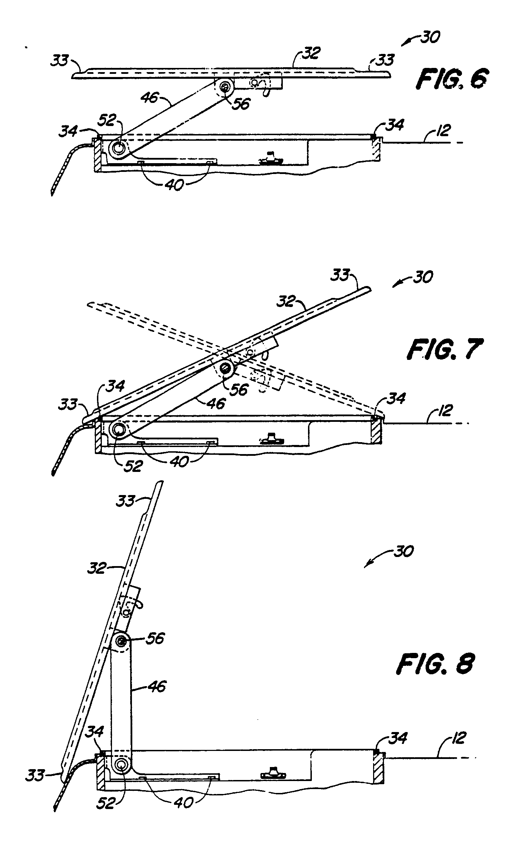

Am hinteren Rahmenteil 24 ist eine verschwenkbare Abdeckklappe 30 befestigt, die einen Klappendeckel 32 aufweist, der in seiner Schließstellung die genannte Dachöffnung 14 vollständig abdeckt (siehe Figur 2). Auf seinem Umfang weist der Klappendeckel 32 eine durchgehend umlaufende, sich über die Umfangskontur der Dachöffnung 14 hinaus erstreckende Lippe 33 auf, die mit ihrer Unterseite bei Schließstellung des Klappendeckels 32 auf einer flexiblen Dichtung 34 aufliegt, die auf dem oberen Rand des Rahmens 20 angeordnet ist. Da die Lippe 33 die Dachöffnung 14 allseitig verhältnismäßig breit überragt, vermag sie den Eintritt von Regen oder Schnee in die Fahrerhauskabine 10 auch dann weitgehend zu verhindern, wenn der Klappendeckel 32 die in Figur 6 dargestellte Stellung einnimmt.

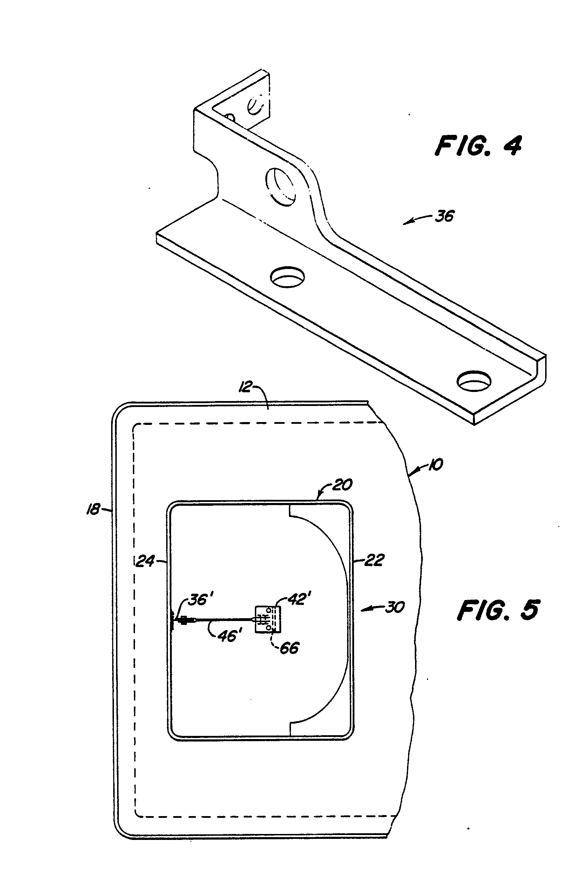

Die Abdeckklappe 30 umfaßt ferner zwei erste Konsolen 36, die über Bolzen 38 mit dem hinteren Rahmenteil 24 verschraubt sind und sich parallel zu den seitlichen Rahmenteilen 26, 28 innerhalb der Kontur des Rahmens 20 nach vorn erstrecken. Die ersten Konsolen 36, von denen eine in Figur 4 dargestellt ist, sind ferner über Schrauben 40 mit den seitlichen Rahmenteilen 26, 28 verschraubt. Zwei zweite Konsolen 42 sind über Bolzen 44 an der Unterseite des Klappendeckels 32 befestigt und erstrecken sich nach unten.

Zwischen jeweils einer ersten Konsole 36 und einer zweiten Konsole 42 sind zwei Schwenkarme 46 befestigt, die jeweils erste und zweite gabelförmig ausgebildete Enden 48, 50 aufweisen. Diese Schwenkarme 46 können aus zwei Teilen zusammengeschweißt, oder aber einteilig gegossen sein. Die ersten gabelförmigen Armenden 48 sind an den ersten Konsolen 36 über Schraubbolzen 52 angelenkt. Ähnlich sind die zweiten gabelförmigen Armenden 50 an mit Gewinde versehenen Enden 54 einer Stange 56 angelenkt, die in den zweiten Konsolen 42 gelagert ist und verhindert, daß der Klappendeckel 32 schief geöffnet wird bzw. sich verzieht. Gemäß Figur 3 ist die Stange 56 mit einem Arm der zweiten gabelförmigen Armenden 50 an Flächen 58 verschweißt, so daß die Stange 56 mit den beiden Schwenkarmen 46 ein gemeinsames Bauteil bildet.

Beidseitig der ersten und zweiten Konsolen 36, 42 und jeweils übergriffen von den ersten und zweiten gabelförmigen Armenden 48, 50 sind scheibenförmige Reibungselemente 60 angeordnet, die aus einem Material mit hohem Reibungskoeffizienten bestehen. Diese Reibungselemente 60 werden in ihrer Lage auf dem Umfang der Bolzen 52 und der mit Gewinde versehenen Enden 54 der Stange 56 gehalten durch Vorspannelemente 62 sowie Justiermuttern 64. Werden letztere angezogen, werden die Vorspannelemente 62, die Federn, federnde Unterlagscheiben o. dergl. sein können, komprimiert und drücken dabei die gabelförmigen Armenden 48, 50 zusammen. Wird das auf die Spannmuttern 64 aufgebrachte Drehmoment erhöht, erhält man einen entsprechend größeren Reibungskontakt an den gabelförmigen Armenden 48, 50. Dabei sollten die Spannmuttern 64 so weit angezogen werden, daß die Schwenkarme 46 relativ gegenüber dem Dach 12 und der Klappendeckel 32 relativ gegenüber den Schwenkarmen 46 verschwenkt werden können, wobei dann die jeweils gewünschten Stellungen auch dann beibehalten werden, wenn das Fahrzeug unebenes Gelände durchquert.

Auf der Unterseite jeder zweiten Konsole 42 ist ein gebogener Handgriff 66 vorgesehen, der die Verschwenkung des Klappendeckels durch den Fahrer erleichtert. Außerdem ist an jeder zweiten Konsole 42 eine Klinke 68 angelenkt, die in Schließstellung des Klappendeckels 32 eine Rast 70 zu hintergreifen vermag. Letztere ist an den seitlichen Rahmenteilen 26, 28 befestigt und ermöglicht eine einbruchssichere Verriegelung des Klappendeckels.

Figur 5 zeigt eine abgewandelte Ausführungsform für eine verschwenkbare Abdeckklappe 30, bei der lediglich ein einziger Schwenkarm 46' vorgesehen ist, der zwischen einer ersten Konsole 36' und einer zweiten Konsole 42' angelenkt ist. Der Klappendeckel 32 läßt sich dann auf der Oberseite der zweiten Konsole 42' ähnlich befestigen wie bei der in Figur 1 dargestellten Ausführungsform. Die Verwendung nur eines einzigen Schwenkarmes 46' ist dann vorteilhaft, wenn der Klappendeckel 32 aus leichtem Material besteht.

Die Figuren 6 bis 8 zeigen verschiedene Stellungen des Klappendeckels 32. Gemäß Figur 6 liegt der geöffnete Klappendeckel 32 parallel zum Dach 12. Diese Stellung ist vorteilhaft bei unfreundlichen, z. B. regnerischen Tagen, wenn der Fahrer zwar eine Belüftung wünscht, nicht aber naß werden möchte. Diese Stellung erhält man durch Verschwenken der Schwenkarme 46 um die Mittelachse der Bolzen 52 und durch Verschwenkung des Klappendeckels 32 um die Mittelachse der Stange 56.

Figur 7 zeigt den Klappendeckel 32 teilweise geöffnet und zwar entweder in Richtung auf die Vorderseite des Fahrzeugs (ausgezogene Linien), oder aber in rückwärtiger Richtung (gestrichelte Linien). In der ersteren Stellung wirkt der Klappendeckel 32 bei Vorwärtsfahrt des Fahrzeuges wie ein Windfänger, der Luft von außerhalb in die Fahrerhauskabine 10 leitet. Diese Stellung erhält man durch Verschwenken der Schwenkarme 46 um die Mittelachse der Bolzen 52. Bei der in Figur 7 gestrichelt dargestellten Klappendeckelstellung definiert der Klappendeckel 32 bei Vorwärtsfahrt des Fahrzeuges eine Ventilationsöffnung, durch die Luft aus der Fahrerhauskabine 10 nach außen abgeleitet werden kann.

Diese Stellung erhält man durch Verschwenken der Schwenkarme 46 um die Mittelachse der Bolzen 52 sowie durch Verschwenken des Klappendeckels 32 um die Mittelachse der Stange 56 über einen größeren Verschwenkwinkel als in Figur 6 dargestellt. Es ist darauf hinzuweisen, daß bei teilweiser Offenstellung des Klappendeckels 32 dessen Lippe 33 auf einem Abschnitt der Dichtung 34 aufliegt ; hierdurch wird sichergestellt, daß der gesamte Luftstrom entweder in die Fahrerhauskabine 10 hinein geleitet, oder aber aus ihr herausgeführt wird.

Figur 8 zeigt den Klappendeckel 32 in seiner größtmöglichen Offenstellung, in der die verschwenkbare Abdeckklappe 30 als Notausstieg Verwendung finden kann. Zur Erreichung dieser Stellung werden die Schwenkarme 46 um die Mittelachse der Bolzen 52 um etwa 90° gegenüber dem Dach 12 verschwenkt, während der Klappendeckel 32 leicht um die Mittelachse der Stange 56 gekippt wird. In dieser Stellung hebt die Lippe 33 von der Dichtung 34 ab und gleitet über die rückwärtige Seite 18 des Dachs 12.

**Patentansprüche**

1. Verschwenkbare Abdeckklappe (30) zum Verschließen einer Öffnung (14) im Dach (12) einer Fahrerhauskabine (10), bestehend aus einem Klappendeckel (32), der in seiner Schließstellung die genannte Dachöffnung (14) vollständig abdeckt, die von einem Rahmen (20) eingefaßt ist, der ein vorderes und hinteres Rahmenteil (22, 24) aufweist, die der Vorderseite (16) bzw. der Rückseite (18) der Fahrerhauskabine (10) zugewandt sind, und aus zumindest einem Schwenkarm (46, 46'), dessen erstes Armende (48) an einer ersten Konsole (36, 36') am hinteren Rahmenteil (24) der Dachöffnung (14) angelenkt ist, um den Klappendeckel (32) gegenüber dem Dach (12) öffnen und schließen zu können, und dessen zweites Armende (50) an einer zweiten Konsole (42, 42') an der Unterseite des Klappendeckels (32) angelenkt ist, um letzteren gegenüber dem Schwenkarm relativ verschwenken zu können, wobei Reibungselemente (60) zwischen den genannten Teilen angeordnet sind um Reibungskontakt zu erzeugen, und Vorspannelemente (62) zum Aufbringen einer vorbestimmten Kraft an Armenden (48, 50) des Schwenkarmes (46, 46') und zur Begrenzung der freien Verschwenkbarkeit an diesen Armenden dienen derart, daß der Klappendeckel (32) seine jeweils gewünschte Stellung relativ gegenüber dem Dach (12) beibehält und somit aus seiner Schließstellung in eine Vielzahl von Offenstellungen verschwenkt werden kann, dadurch gekennzeichnet, daß nur am hinteren Rahmenteil (24) zumindest ein starr ausgebildeter Schwenkarm (46, 46') angelenkt ist, der gabelförmige Armenden (48, 50) aufweist, und daß die Reibungselemente (60) jeweils zwischen den Konsolen (36, 42) und den an ihnen angelenkten gabelförmigen Armenden (48, 50) angeordnet sind.

2. Abdeckklappe nach Anspruch 1, dadurch gekennzeichnet, daß innerhalb der Umfangskontur der Öffnung (14) im Dach (12) zwei Schwenkarme (46) vorgesehen sind, wobei die beiden Anlenkpunkte (52) ihrer ersten Armenden (48) wie auch die beiden Anlenkpunkte (56) ihrer zweiten Armenden (50) jeweils gemeinsam je eine senkrecht zu den Schwenkarmen (46) verlaufende Schwenkachse bilden.

3. Abdeckklappe nach Anspruch 1 oder 2, dadurch gekennzeichnet, daß die Vorspannelemente (62) Federn sind.

4. Abdeckklappe nach Anspruch 3, dadurch gekennzeichnet, daß die genannten Federn (62) federnde Unterlagscheiben sind.

5. Abdeckklappe nach einem der vorhergehenden Ansprüche, dadurch gekennzeichnet, daß die Reibungselemente (60) Reibungsscheiben sind.

6. Abdeckklappe nach Anspruch 3, 4 oder 5, dadurch gekennzeichnet, daß die federnden Vorspannelemente justierbar sind (64), um zwischen den Reibungsscheiben (60), der zugeordneten Konsole (36, 42) sowie dem zugeordneten gabelförmigen Armende (48, 50) eine einstellbare Kraft hervorzurufen, die sowohl die Schwenkarme (46) als auch den Klappendeckel (32) in gewünschten Stellungen gegenüber dem Dach (12) festhalten.

7. Abdeckklappe nach einem der Ansprüche 2 bis 6, dadurch gekennzeichnet, daß eine Stange (56) zwischen den zweiten Konsolen (42) gelagert und fest mit den zweiten Armenden (50) der Schwenkarme (46) verbunden ist.

8. Abdeckklappe nach einem der vorhergehenden Ansprüche, dadurch gekennzeichnet, daß zur Verriegelung des Klappendeckels (32) in seiner Schließstellung am Rand des Klappendeckels auf seiner Unterseite eine Klinke (68) vorgesehen ist, die eine am Dach (12) befestige Rast (70) hintergreifen kann.

9. Abdeckklappe nach einem der vorhergehenden Ansprüche, dadurch gekennzeichnet, daß der Klappendeckel (32) auf seinem Umfang eine durchgehend umlaufende, sich über die Umfangskontur der Dachöffnung (14) hinaus erstreckende Lippe (33) aufweist und wahlweise um das vordere oder hintere Rahmenteil (22, 24) des Rahmens (20) verschwenkbar ist.

10. Abdeckklappe nach einem der vorhergehenden Ansprüche, dadurch gekennzeichnet, daß auf dem oberen Rand des Rahmens (20) eine Dichtung (34) angeordnet ist.

## Claims

1. Swinging closure hatch (30) for closing an opening (14) in the roof (12) of a driver cab (10), consisting of a hatch cover (32) which completely covers the said roof opening (14) in its closed position, the opening being surrounded by a frame (29) which has a front and a rear frame part (22, 24) which are directed towards the front side (16) and the rear side (18) respectively of the driver cab (10), and at least one swinging arm (46, 46') whose first arm end (48) is pivoted on a first bracket (36, 36') on the rear frame part (24) of the roof opening (14), in order to be able to open and close the hatch cover (32) relative to the roof (12), and whose second arm end (50) is pivoted to a second bracket (42, 42') on the underside of the hatch cover (32), in order to be able to swing the latter relative to the swinging arm, wherein friction elements (60) are arranged between the said parts in order to create frictional contact, and pre-tensioning elements (62) for applying a predetermined force at the arm ends (48, 50) of the swinging arm (46, 46') and for limiting the freedom to swing at these arm ends so acting that the hatch cover (32) holds its currently desired position relative to the roof (12) and thus can be swung out of its closed position into a multiplicity of open positions, characterized in that at least one rigidly formed swinging arm (46, 46') having forked ends (48, 50) is pivoted only on the rear frame part (24) and in that the friction elements (60) are arranged between the brackets (36, 42) and the forked arm ends (48, 50) pivoted thereto.

2. Closure hatch according to claim 1, characterized in that, within the peripheral outline of the opening (14) in the roof (12) two swinging arms (46) are provided, the two pivot points (52) of their first arm ends (48) and also the two pivot points (56) of their second arm ends (50) each forming a pivotal axis running perpendicular to the swinging arms (46).

3. Closure hatch according to claim 1 or 2, characterized in that the pre-tensioning elements (62) are springs.

4. Closure hatch according to claim 3, characterized in that the said springs (62) are spring washers.

5. Closure hatch according to one of the preceding claims, characterized in that the friction elements (60) are friction washers.

6. Closure hatch according to claim 3, 4 or 5, characterized in that the spring pre-tensioning elements are adjustable (64), in order to establish an adjustable force between the friction washers (60), the associated brackets (36, 42) and the associated forked arm ends (48, 50), which holds both the swinging arms (46) and the hatch cover (32) in desired positions relative to the roof (12).

7. Closure hatch according to one of claims 2 to 6, characterized in that a rod (56) is pivoted between the second brackets (42) and fixedly connected to the second arm ends (50) of the swinging arms (46).

8. Closure hatch according to one of the preceding claims, characterized in that a catch (68) is provided at the edge of the hatch cover (32) on its underside, which can engage a latch (70) fixed on the roof (12) for locking the hatch cover (32) in its closed position.

9. Closure hatch according to one of the preceding claims, characterized in that the hatch cover (32) has a lip (33) running continuously round its periphery, extending over the peripheral outline of the roof opening (14) and is selectively swingable about the front or rear frame part (22, 24) of the frame (20).

10. Closure hatch according to one of the preceding claims, characterized in that a seal (34) is arranged on the upper edge of the frame (20).

**Revendications**

1. Panneau de fermeture pivotant (30) pour l'obturation d'une ouverture (14) ménagée dans le toit (12) d'une cabine de conduite (10), comprenant un couvercle ou panneau proprement dit (32) qui, dans sa position de fermeture, recouvre complètement ladite ouverture (14) du toit, qui est entourée par un cadre (20) qui comporte une partie antérieure et une partie postérieure (22, 24) qui se trouvent respectivement vers l'avant (16) et vers l'arrière (18) de la cabine de conduite (10), et au moins un bras pivotant (46, 46') dont la première extrémité (48) est articulée à une première console (36, 36') sur la partie de cadre postérieure (24) de l'ouverture de toit (14) pour pouvoir ouvrir et fermer le couvercle (32) par rapport au toit (12), et dont la seconde extrémité (50) est articulée à une seconde console (42, 42') sur la face inférieure du couvercle (32), pour pouvoir faire pivoter ce dernier par rapport au bras pivotant, des éléments de friction (60) étant disposés entre les parties précitées pour produire un contact de friction et des éléments de précontrainte (62) servant à appliquer une force prédéterminée à des extrémités (48, 50) du bras pivotant (46, 46') et à limiter la liberté de pivotement à ces extrémités de bras, de telle sorte que le couvercle (32) garde sa position souhaitée dans chaque cas par rapport au toit (12) et qu'on peut donc le faire passer par pivotement de sa position de fermeture à une pluralité de positions d'ouverture, caractérisé en ce qu'il est articulé seulement à la partie de cache postérieure (24) au moins un bras pivotant (46, 46') de conformation rigide, qui comporte des extrémités en forme de chape (48, 50), et en ce que les éléments de friction (60) disposés respectivement entre les consoles (36, 42) et les extrémités d'arbre en forme de chape (48, 50) qui y sont articulées.

2. Panneau de fermeture suivant la revendication 1, caractérisé en ce qu'il est prévu, à l'intérieur du contour périphérique de l'ouverture (14) ménagée dans le toit (12), deux bras pivotants (46), les deux points d'articulation (52) de leur première extrémité (48) et les deux points d'articulation (56) de leur seconde extrémité (50) définissant chaque fois ensemble un axe de pivotement s'étendant perpendiculairement aux bras pivotants (46).

3. Panneau de fermeture suivant la revendication 1 ou 2, caractérisé en ce que les éléments de précontrainte (62) sont des ressorts.

4. Panneau de fermeture suivant la revendication 3, caractérisé en ce que lesdits ressorts (62) sont constitués par des rondelles de type Belleville.

5. Panneau de fermeture suivant l'une des revendications précédentes, caractérisé en ce que les éléments de friction (60) sont des disques de friction.

6. Panneau de fermeture suivant la revendication 3, 4 ou 5, caractérisé en ce que les éléments de précontrainte élastiques sont réglables (64) pour pouvoir créer entre les disques de friction (60), la console correspondante (36, 42), ainsi que l'extrémité en forme de chape correspondante (48, 50) du bras une force réglable qui maintient à la fois les bras pivotants (46) et le couvercle (32) dans les positions désirées par rapport au toit (32).

7. Panneau de fermeture suivant l'une des revendications 2 à 6, caractérisé en ce qu'une barre (56) est montée entre les deux consoles (42) et est reliée rigidement aux secondes extrémités (50) des bras pivotants (46).

8. Panneau de fermeture suivant l'une des revendications précédentes, caractérisé en ce que, pour le verrouillage du couvercle (32) dans sa position de fermeture, il est prévu sur le bord de ce panneau sur sa face inférieure un verrou (68) qui peut être engagé derrière une gâche (70) fixée sur le toit (12).

9. Panneau de fermeture suivant l'une quelconque des revendications précédentes, caractérisé en ce que le couvercle (32) présente sur sa périphérie une lèvre (33) l'entourant de façon continue et s'étendant au-delà du contour de l'ouverture (14) du toit, et qu'on peut le faire pivoter à volonté autour de la partie avant ou de la partie arrière (22, 24) du cadre (20).

10. Panneau de fermeture suivant l'une quelconque des revendications précédentes, caractérisé en ce qu'un joint (34) est prévu sur le bord supérieur du cadre (20).

FIG. 1

**FIG. 2**

**FIG. 3**

FIG. 4

36

12

10

20

18

24

22

30

36'    42'

46'    66

FIG. 5

FIG. 6

FIG. 7

FIG. 8